# EUROPÄISCHE PATENTANMELDUNG

(11) **EP 4 711 648 A1**
(43) Veröffentlichungstag der Anmeldung: **18.03.2026**
(21) Anmeldenummer: 25202602.6
(22) Anmeldetag: 16.09.2025
(51) Int. Cl.: F16J 15/14, F24D 19/00, F24F 13/20

(54) **VERFAHREN ZUR DICHTUNG EINES KAPSELGEHÄUSES IN EINEM KÄLTEKREIS DURCH VERGUSS, DICHTUNGSSYSTEM DAFÜR**

(30) Priorität: 17.09.2024 DE 102024126786
(71) Anmelder: Vaillant GmbH, 42859 Remscheid NRW (DE)
(72) Erfinder: Schnese, Jan Felix, 42697 Solingen (DE); Brinkbäumer, Thomas, 44629 Herne (DE); Klawikowski, Nadine, 58802 Balve (DE)
(74) Vertreter: Popp, Carsten

(57) **Zusammenfassung**

Verfahren und Dichtungssystem zur Dichtung eines Kapselgehäuses (6) in einem Kältekreis durch Verguss, wobei im Kapselgehäuse (6) kältemittelführende Teile eingeschlossen sind und Rohrleitungsanschlüsse für Gase und/oder Flüssigkeiten aus dem Kapselgehäuse (6) heraus oder in das Kapselgehäuse (6) hineinführen, das Kapselgehäuse (6) aus zwei oder mehr Schalen (1, 2) zusammengesetzt ist, und Öffnungen für die Rohre und Rohrleitungsanschlüsse aufweisen, diese Schalen (1, 2) miteinander fixiert werden, nachdem alle im Kapselgehäuse (6) einzukapselnden Einrichtungen darin montiert und die sie verbindenden Rohrleitungen angeschlossen sind, um die Schalen (1, 2) und um die Öffnungen herum Nuten oder entsprechende Aussparungen (3) eingelassen sind, in diese Nuten oder entsprechende Aussparungen (3) Weichformteile (4) eingelegt werden, die so gestaltet sind, dass Flüssigkeit durch sie davon abgehalten wird, in das Innere des Kapselgehäuses (6) zu fließen, in diese Nuten oder entsprechenden Aussparungen (3) von oben eine flüssige Vergussmasse eingefüllt wird, die mit geeigneten Mitteln verfestigt wird und eine dichtende Masse ergibt.

## Beschreibung

Die Erfindung betrifft irreguläre Zustände in Kältekreisen, in denen ein als Kältemittel wirkendes, gefährliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Insbesondere betrifft die Erfindung eine Wärmepumpe, die innerhalb eines Wohngebäudes aufgestellt wird und die ihre Wärme aus dem Außenbereich des Wohngehäuses bezieht, entweder aus dem Erdreich oder aus der Luft oder beidem. In derselben Weise betrifft dies Klimaanlagen und Anlagen, die über eine entsprechende Umschaltmöglichkeit zwischen beiden Betriebsarten verfügen. Hierfür ist eine Kapselung sicherheitsrelevanter Bauteile vorgesehen, welche gegenüber Kältemittelleckagen dicht sein muss, wobei die Kapselung aus einer Kapselvorrichtung und einem Kapselungsverfahren zum Zusammenbau der Kapselvorrichtung besteht. Die Kapseldichtung dieser Kapselvorrichtung unter Einsatz von Verguss ist Gegenstand der Vorrichtung und des Dichtungsverfahrens während des Zusammenbauens der Kapselvorrichtung.

Stand der Technik sind außen aufgestellte Wärmepumpen mit brennbaren, natürlichen Kältemitteln, die als Monoblock ausgeführt sind, sowie Wärmepumpen mit einem Teil des Kältekreises, insbesondere dem Kondensator, im Innenbereich, die teils noch mit umweltschädlichen, aber nicht brennbaren Kältemitteln betrieben werden, wobei dieses Kältemittel zwischen Innenbereich und Außenbereich im sogenannten Split-Betrieb zirkuliert. Inzwischen werden diese klimaschädlichen, aber ungiftigen und unbrennbaren Kältemittel durch Kältemittel ersetzt, die zwar klimaunschädlich, dafür aber meistens entzündlich und teilweise auch giftig sind. Vor allem sind dies R290, R1270, R600a, R32 und R441. Es ist also auf jeden Fall zu verhindern, dass solche Kältemittel in den Innenraum des Aufstellungsgebäudes gelangen könnten.

Im Falle von umschaltbaren Wärmepumpen und Klimaanlagen sind die problematischen Teile die, durch die Kältemittel oder Wärmeträgermedien im Innenbereich fließen. Bei den Wärmeträgermedien handelt es sich um wässrige Sole, die die Wärme oder Kälte aus dem Außenbereich nach innen bringt, oder um das Heizkreiswasser im Innenbereich, oder um das Kältemittel selbst. Bekannt sind auch gestufte Systeme, bei denen eine erste Anlage die Wärmeverschiebung vom Außenbereich in den Innenbereich vornimmt und wo dann von dort aus eine Verzweigung an mehrere Verbraucher erfolgt. Hieran werden dann weitere Verschiebungssysteme, also etwa Wärmepumpen, Heißwassererzeuger, Kühl- oder Gefrieranlagen oder Klimatisierungen einschließlich Luftfeuchtigkeitsregulierungssystemen, als weitere Nutzungen angeschlossen, wobei das Kältemittel jeweils anwendungsbezogen gewechselt wird. Es kann sich also um sehr viele in Frage kommende Teile handeln, deren Dichtigkeit langfristig, d.h. über Jahrzehnte, und zuverlässig, also auch bei unvorhersehbaren Situationen und nicht nur im Regelbetrieb, sicherzustellen ist.

Das ist oft eine Kostenfrage und häufig entstehen Zielkonflikte, wenn die Effizienz durch die entsprechenden Maßnahmen sinkt. Das ist beispielsweise der Fall bei der Verwendung doppelwandiger Wärmetauscher aus Edelstahl. Edelstahl hat ein schlechtes Wärmeleitvermögen und die Doppelwandigkeit wird bekanntlich auch in Isolierbehältern dazu verwendet, die Wärmeleitung zu verhindern. Bei Kältemittelleitungen aus Kupfer kommt dann noch dazu, dass auch Lötverbindungen langfristig korrodieren und undicht werden können. Das betrifft auch die Übergänge und Anschlüsse, also die Fittings und ggf. lösbaren Verbindungen und Ventile.

Eine Möglichkeit der Abhilfe besteht darin, solche kritischen Komponenten durch günstige und effiziente Komponenten zu ersetzen und dann mit einer Kapselung zu versehen. Allerdings verschiebt sich dann das Problem hin zur Dichtigkeit der Kapsel. Je mehr Komponenten in einer solchen Kapselung umfasst werden, desto größer werden solche Kapselungen und desto aufwändiger werden die Dichtung der Kapsel und die notwendige Wartung der Apparate innerhalb der Kapsel. Daraus ergibt sich ein Zielkonflikt.

Dieser Zielkonflikt verschärft sich dadurch, dass die Formteile nur mit großen Toleranzen günstig gefertigt werden können und oft auch flexible und leicht verbiegbare Formteile aus unterschiedlichen Materialien dichtend verbunden werden müssen. Und die müssen auch bei erhöhtem Innendruck und bei entsprechenden Verformungen immer dicht bleiben, und zwar gerade dann.

Die Aufgabe der Erfindung ist daher die Auflösung dieses Zielkonflikts, was durch Anwendung von Verguss, auch als Potting oder Encapsulating bezeichnet, erreicht wird. Allerdings muss das bekannte Standardverfahren aus der Elektroindustrie hierfür erheblich modifiziert werden.

Solche Vergusstechniken sind bekannt aus der Herstellung von Elektro- und Elektronikkomponenten, wobei es sich in der Regel um Kleinteile oder Wicklungen von Elektromotoren handelt. Hierbei wird flüssiger Kunststoff vergossen, um nach dem Aushärten die Komponenten zu schützen und elektrisch zu isolieren. Üblich ist es dabei, die Teile als Ganze zu vergießen. Dies ist jedoch bei der Größe von Teilen, die bei Vorrichtungen mit Kältekreisen zum Einsatz kommen, nicht wirtschaftlich möglich und im Übrigen auch nicht sinnvoll.

Beispielsweise beschreibt die EP 2 663 598 B1 eine Tränkharzformulierung für elektrische Wicklungen, enthaltend ein ungesättigtes Polyesterharz und Polybutadien sowie deren Verwendung als Tränk-, Verguss- und Überzugmassen für elektrische oder elektronische Bauteile oder Geräte.

Die DE 20 2015 106 261 U1 beschreibt eine UV-härtbare Dichtmasse mit einem polyfunktionellen (meth)acrylierten Urethanharz, mindestens einem monofunktionellen (Meth)acrylat, mindestens einem trifunktionellen (Meth)acrylat sowie üblichen Additiven und Initiatoren. Die Dichtmasse ist gasdicht und hält einem Überdruck stand. Die Dichtmasse wird auf die zu dichtenden Flächen aufgetragen und dient als Dichtung, die durch UV-Licht ausgehärtet wird, gegen das Eindringen in das Gehäuse zum Schutz dessen Inhalts. Der Schutz dient also dem Inneren des Gehäuses.

Die WO 2019 050 122 A1 beschreibt eine Kühlvorrichtung zur Abfuhr von Abwärme. Hierbei wird eine Kältemittelleitung in eine zweischalige, flache Box eingelegt und die Kältemittelleitung wird so geformt, dass der Einlass und der Auslass an einer Seite aus der Box herausragen, während die Box mittels Führungen für die Kältemittelleitungen dafür sorgt, dass die Kältemittelleitungen bei Temperaturwechseln am vorgesehenen Ort bleiben. Dann wird der Hohlraum zwischen den Kältemittelleitungen mit einem wärmeleitenden, aber gasdicht aushärtenden Vergussmaterial vergossen, wobei auch die Anschlüsse mitabgedichtet werden.

Bei ganzen Kältekreisen oder Teilen davon wird jedoch Schutz vor dem Entweichen aus dem eingekapselten Gehäuse gefordert, wobei sich kurzfristig Druck mit dem Risiko von leichten Verformungen aufbauen könnte. Will man solche Kapselgehäuse günstig produzieren, etwa durch einfache Blechumformung, Stanzen, Prägen und Tiefziehen, oder auch aus widerstandsfähigem Kunststoff, ist die Verwendung von einfachen dünnen Blechen vorteilhaft. Die haben jedoch den Nachteil, dass sie sich unter Druckeinwirkung leichter ungewollt verformen und außerdem, dass Fertigungstoleranzen von bis zu drei Millimetern toleriert werden müssen.

Die Erfindung schlägt hierzu ein Vergussverfahren vor und eine darauf angepasste Vorrichtung, bei dem nur derjenige Dichtungsraum vergossen wird, in welchem üblicherweise eine Dichtung von Kapselgehäusen platziert wird, während die Kapselgehäuse aus Schalenteilen zusammengesetzt und miteinander form- und kraftschlüssig fixiert sind, beispielsweise mittels Schraub- oder Flanschverbindungen, durch Nietverbindungen, Klebeverbindungen, Steckverbindungen oder Kombinationen daraus.

Zusätzlich wird für jede Dichtfläche vor der Fixierung der Schalenteile des Kapselgehäuses ein Formkörper aus weichem Material eingesetzt oder an Schalenteile angespritzt, beispielsweise aus Silikon, wie es aus Küchenutensilien bekannt ist. Dieser Formkörper verhindert, dass die Dichtungsmasse beim flüssigen Einfüllen aus dem Dichtungsraum in das Innere der Kapsel fließen kann. Der Formkörper besitzt dabei Aussparungen für die Rohranschlüsse, die aus dem Kapselgehäuse führen. Die Dichtmasse überträgt keine Kräfte, etwa durch Klebewirkung, sondern erfüllt lediglich abdichtende Aufgaben.

Auf herkömmliche Art kann bestenfalls unter enormem Aufwand und Risiko ein gasdichtes Casing für den Wärmetauscher der Inneneinheit hergestellt werden. Der Verguss ermöglicht es jedoch, flexible oder mit großen Toleranzen behaftete Bauteile, wie sie am Kondensator vorkommen können, zu umschließen und so auf elegantem Wege die geforderte Gasdichtigkeit zu erzeugen und dabei die Flexibilität zu erhalten.

Das ist wegen der Wärmespannungen anspruchsvoll, wenn bei solch unterschiedlichen Bedingungen über sehr lange Zeit die Dichtigkeit und die Leckagefreiheit sicherzustellen sind. Gleichzeitig sollen die Wärmetauscher einen idealen Wärmeübergang leisten, was mit typischen Sicherheitsanforderungen kollidiert, beispielsweise sinkt der Wirkungsgrad der Wärmeübertragung bei der Verwendung teurer doppelwandiger Wärmetauscher, wie sie die EP 3 598 039 B1 zwingend vorsieht, was die erforderlichen Temperaturdifferenzen erhöht und damit den COP (Coefficient of Performance) verringert.

Außerdem sollen die Wärmepumpen sowohl im Heizbetrieb als auch im Kühlbetrieb nicht nur möglichst sicher und möglichst energieeffizient sein, sondern auch möglichst preiswert. Wünschenswert wäre also eine Lösung, deren apparativer Aufwand gering ist und die auch leicht montierbar ist.

Zum einen bilden Gehäuse und Deckel die notwendige Form, die von außen gefüllt wird. Zum anderen bilden Deckel und Gehäuse oder ein zusätzliches Einlegeteil im Gehäusedeckel und die zu umgießenden Komponenten die Formen durch entsprechende Aussparungen, die mit Vergussmaterial gefüllt werden. Aufgrund der Viskosität des Vergussmaterials, vorzugsweise eines 2-Komponentenmaterials, entfällt dann das Glattstreichen, die Masse nivelliert sich selbst aufgrund der Schwerkrafteinwirkung aus. Die Weichformkomponente dient weiterhin dazu, Fertigungstoleranzen aus den Vorprozessen auszugleichen. Sie reicht allerdings nicht aus, um die geforderte Dichtigkeit zu erzielen.

Die Aufgabe der Erfindung ist daher, ein Verfahren und eine Vorrichtung zum sicheren und dichten Kapseln eines Gehäuses bereitzustellen, welches geeignet ist, Kältemittel führende Teile und Rohrleitungen sicher und günstig einzuschließen, und zwar unter Berücksichtigung von Biegefestigkeit und Fertigungstoleranzen.
Die Erfindung löst die Aufgabe durch ein Verfahren zur Dichtung eines Kapselgehäuses in einem Kältekreis durch Verguss, wobei
- im Kapselgehäuse kältemittelführende Teile eingeschlossen sind und Rohrleitungsanschlüsse für Gase und/oder Flüssigkeiten aus dem Kapselgehäuse heraus oder in das Kapselgehäuse hineinführen,
- das Kapselgehäuse aus zwei oder mehr Schalen zusammengesetzt ist, und welche Öffnungen für die Rohre und Rohrleitungsanschlüsse aufweisen,
- diese Schalen miteinander fixiert werden, nachdem alle im Kapselgehäuse einzukapselnden Einrichtungen darin montiert und die sie verbindenden Rohrleitungen angeschlossen sind,
- um die Schalen und um die Öffnungen herum Nuten oder entsprechende Aussparungen eingelassen sind,
- in diese Nuten Weichformteile eingelegt oder angespritzt werden, die so gestaltet sind, dass Flüssigkeit durch sie davon abgehalten wird, in das Innere des Kapselgehäuses zu fließen, wobei
- in diese Nuten oder entsprechenden Aussparungen von oben eine flüssige Vergussmasse eingefüllt wird, die mit geeigneten Mitteln verfestigt wird und eine dichtende Masse ergibt.

In den meisten Anwendungsfällen kommt man mit zwei Schalen aus, Im Beispielfall sind diese Schalen eine Unterschale und ein Deckel. Je nach Anzahl der Leitungen, die in das Kapselgehäuse hinein- oder herausführen, kann es nötig oder sinnvoll sein, im Bereich der Leitungen weitere Schalenteile vorzusehen, um nach der Montage der Leitungen und Armaturen die Schalen nacheinander einzusetzen und zu fixieren. Solche weiteren Schalenteile können auch Adaptergehäuse sein, in denen Leitungen für einen Mauerdurchbruch angeschlossen werden.

Im Falle von Wärmepumpen, bei denen ein Wasserkreislauf für Heizkreiswasser, oder im Sommerfall Kühlwasser, in das Kapselgehäuse geführt wird, müssen die wasserführenden Rohre nicht schon vor dem Vergießen fest mit dem Inneren der Kapsel verbunden werden, sondern es müssen nur die Anschlüsse fest verbunden sein. Das erleichtert die erforderlichen Translations- und Drehvorgänge beim Vergießen. Trotzdem ist es sinnvoll, alle diese Anschlüsse soweit wie praktikabel schon vorher zu verbinden und diese Möglichkeit beim konstruktiven Design zu berücksichtigen. Damit lassen sich die erforderlichen Translations- und Drehvorgänge beim Vergießen verringern, was bei der Montage und dem Verguss Kostenvorteile bringt.

In einer Ausgestaltung ist vorgesehen, dass die Kapselform durch eine Translationsvorrichtung während des Vergießens so gedreht wird, dass die Vergussmasse immer der Schwerkraft entsprechend von oben zugeführt wird. Trotzdem wird man versuchen, alle Dichtungsflächen auf einer Seite vorzusehen, da dann keine dreidimensionale Translations-und Drehbewegung erforderlich ist, oder mit möglichst wenigen solcher Translations- und Drehbewegungen auskommen wollen. In einer Ausgestaltung ist daher vorgesehen, eine Befüllung nur von oben vorzusehen und das Design der Kapselvorrichtung so zu gestalten, dass die Befüllung von oben ohne Translations- und Drehvorgänge beim Vergießen erfolgen kann.

In einer weiteren Ausgestaltung ist vorgesehen, dass die Vergussmasse eine Tränkharzformulierung ist. Das ist ein 2-Komponenten-Kunststoff, der selbstständig aushärtet. In einer bevorzugten Ausgestaltung ist vorgesehen, dass die Vergussmasse ein UV-härtbares Zwei-Komponenten-Urethanharz oder ein Zwei-Komponenten-Kunststoff ist.

Die Erfindung löst die Aufgabe auch mittels eines Dichtungssystems für eine Kapselvorrichtung, die geeignet für eine dichte Einkapselung von Kältemittel führenden Teilen sowie hierzu dienenden Anschlüssen und Rohrleitungen eines Kältekreises ist, aufweisend mindestens ein Kapselgehäuse, wobei
- das Kapselgehäuse aus zwei oder mehr Schalen zusammengesetzt ist, und die Schalen Öffnungen für die Rohre und Rohrleitungsanschlüsse aufweisen,
- Fixierungseinrichtungen, mit denen diese Schalen miteinander fixiert werden,
- um die Schalen und um die Öffnungen herum Nuten oder entsprechende Aussparungen eingelassen sind,
- in diese Nuten oder entsprechende Aussparungen Weichteile eingelegt oder angespritzt sind, die so gestaltet sind, dass Flüssigkeit durch sie davon abgehalten wird, in das Innere des Kapselgehäuses zu fließen, wobei
- in den umlaufenden Nuten oder entsprechenden Aussparungen über den Weichformteilen eine gehärtete Vergussmasse eingefügt ist, welche alle Verbindungsteile der Kapselvorrichtung dicht umschließt.

Die gehärtete Vergussmasse ist im ausgehärteten Zustand vorzugsweise etwas elastisch und damit in der Lage, kleine Verformungen auszugleichen, ohne die Dichtigkeit zu verlieren. Die Weichteile können auch flächig sein und die Größe und Form der Oberschale aufweisen und dabei im Bereich der Nuten entsprechend Verdickungen oder Formgebungen mit Nasen, welche der Zurückhaltung von Vergussmasse beim Einfüllen dienen.

Die Erfindung wird nachfolgend anhand von 24 Figuren näher erläutert. Dabei zeigen:
- Fig. 1: eine Kapselunterschale mit montiertem Deckel, Aussparung und Weichformteil,
- Fig. 2a, 2b: eine Kapselunterschale mit aufgelegtem Deckel, Aussparung und Weichformteil,
- Fig. 3a bis 3c: eine Kapsel mit vergossenem Deckel in Perspektivansicht,
- Fig. 4a bis 4f: einen Schnitt eines vergossenen Rohranschlusses und vergossener Schnittstelle von Deckel und Gehäuse,
- Fig. 5a bis 5i: die Reihenfolge der Montage- und Vergussschritte
- Fig. 6a bis 6c: den Verguss von Rohranschlüssen

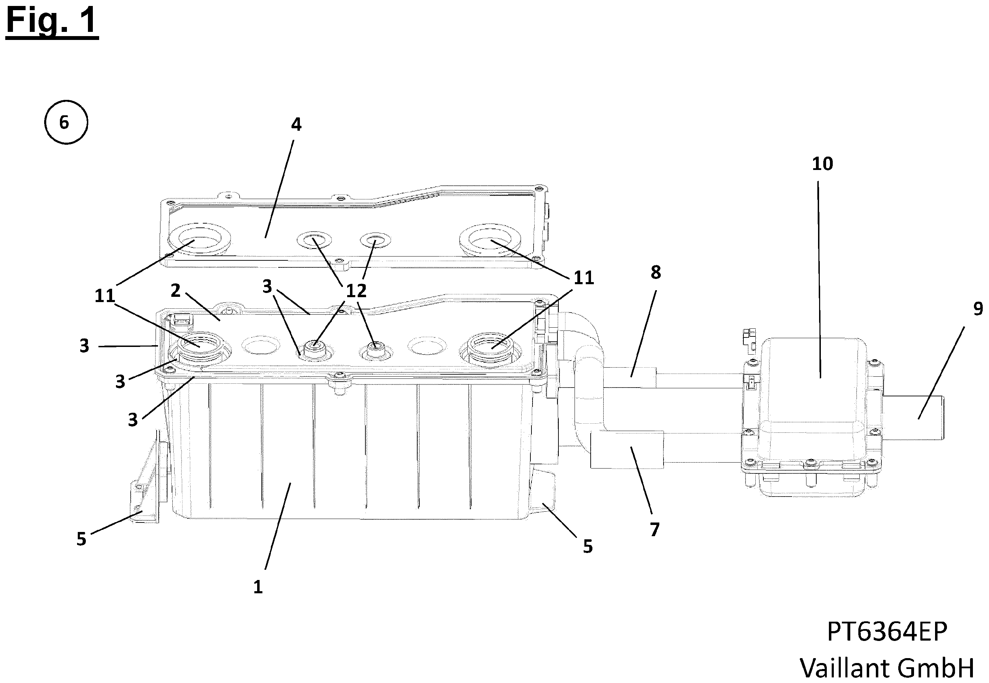

Fig. 1 zeigt eine Unterschale 1 mit verschraubtem Deckel 2, der Aussparung 3 und dem Weichformteil 4. Zusammen mit den Aufhängungen 5 bilden diese zusammen das Kapselgehäuse 6, aus dem rechts die Kältemittelanschlüsse 7 und 8 aus dem Kapselgehäuse 6 herausgeführt werden. Ebenfalls herausgeführt wird rechts eine Abluftleitung 9 die mit einem Adapter-Kapselgehäuse 10 verbunden ist. Zum Vergießen muss das Kapselgehäuse so positioniert werden, dass von oben die Vergussmasse in die vorgesehenen Aussparungen 3 eingefüllt werden kann.

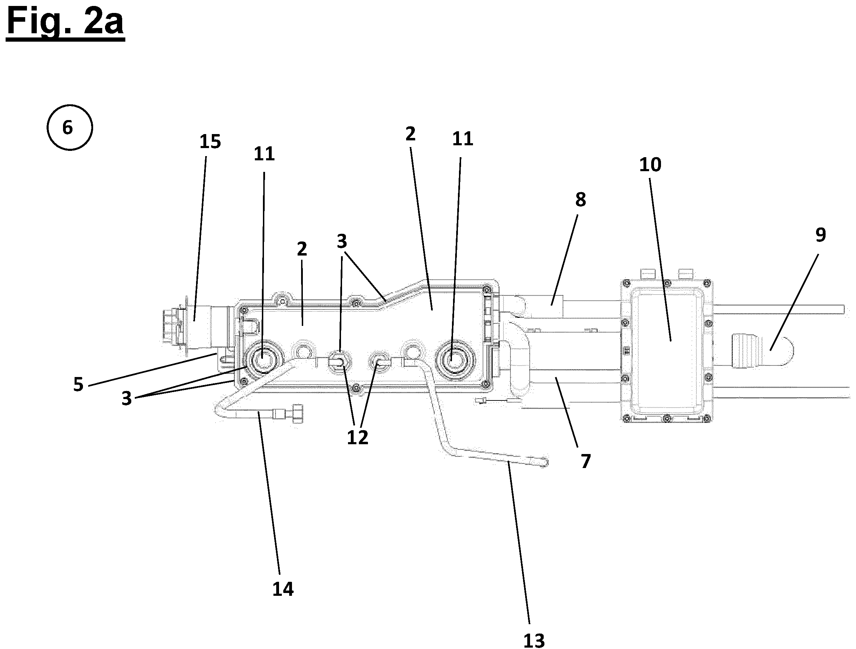

Zu sehen sind in Fig. 1 auch die Anschlüsse 11 für den Warmwasserkreislauf und weitere Serviceöffnungen 12. Diese Öffnungen werden ebenfalls an ihren Rändern vergossen. Sollten also an den Anschlüssen 11 für den Warmwasserkreislauf mit der Zeit Undichtigkeiten entstehen, würden diese ins Kapselgehäuse 6 entweichen, weil die Öffnungen für den Warmwasserkreislauf gegenüber dem Aufstellungsgehäuse wegen des Vergusses dicht sind. Solcherlei aufgrund von Leckagen oder Undichtigkeiten entwichenes Gas, welches aus Luft, Wasserdampf, Wasser und gasförmigem Kältemittel bestünde, würde über die Abluftleitung 9 ins Freie geleitet werden können, ohne innerhalb des Aufstellungsraums oder des Aufstellungsgebäudes Schaden anrichten zu können. Flüssigkeiten würden über die als Siphon ausgeführte Drainage 15 (siehe Fig. 2a) abgeleitet.

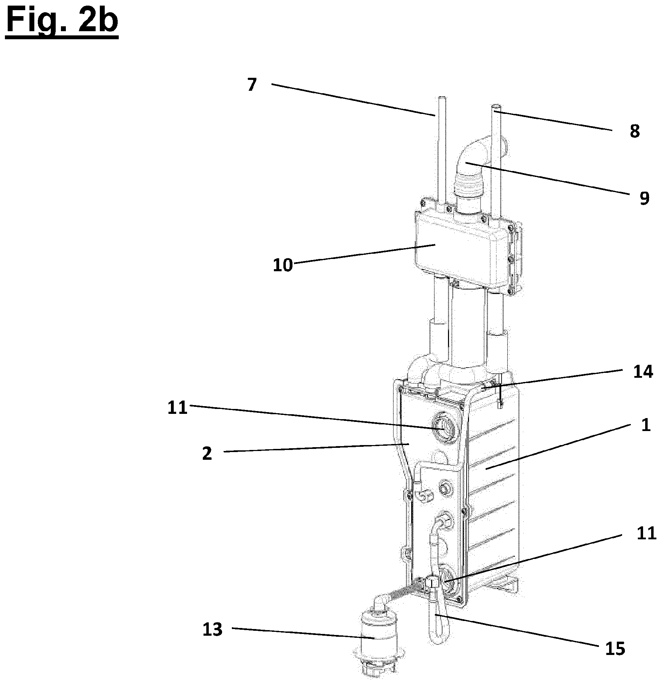

Fig. 2a zeigt den gleichen Gegenstand wie Fig. 1, bei dem der Deckel 2 auf der Kapselunterschale 1 fixiert ist, jedoch ohne den anschließenden Verguss. In den Serviceöffnungen 12 sind hier bereits die Leitungen zum Kältemittel-Luftabscheider 13, zum Überdruckventil 14 und zur Drainage 15 angebracht. Beim Verguss fährt das Vergusswerkzeug um diese Leitungsinstallationen drumherum, wenn es die Aussparungen 3 füllt. Fig. 2b zeigt denselben Gegenstand perspektivisch.

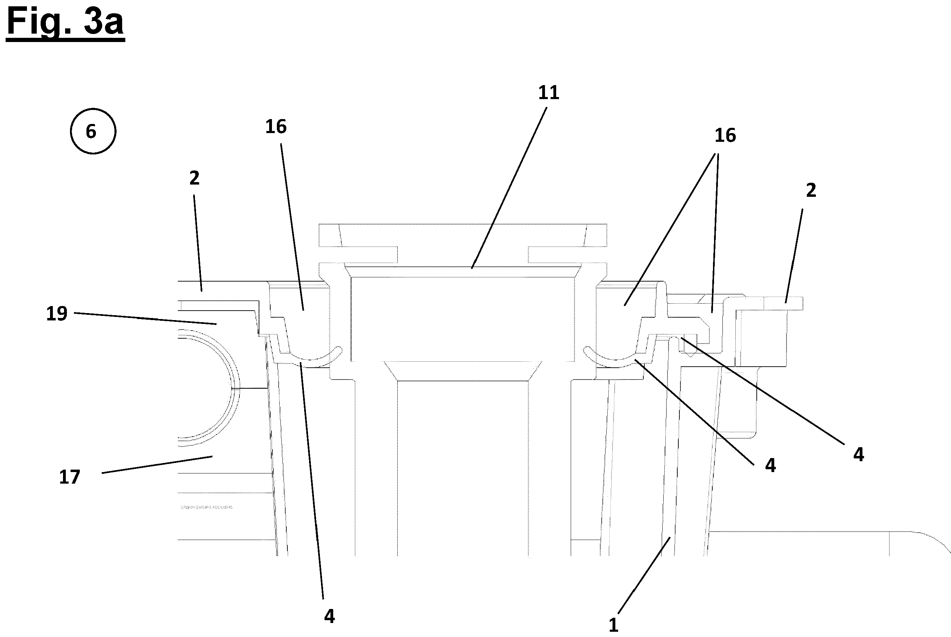

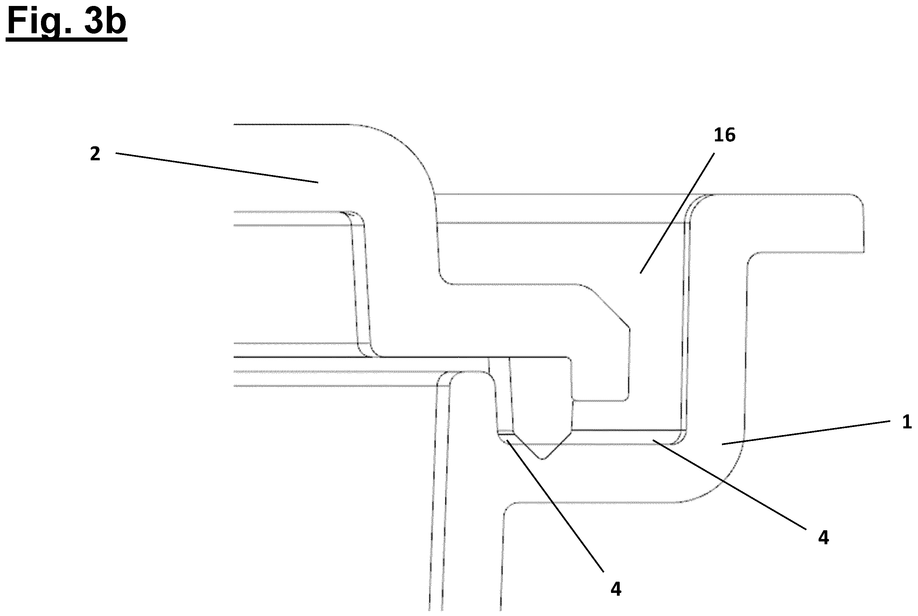

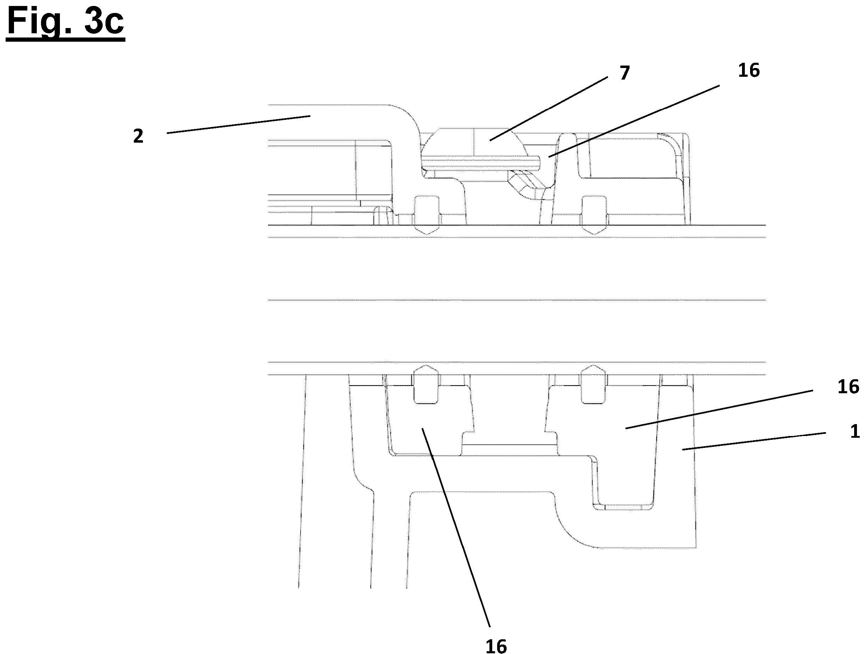

Fig. 3a, Fig. 3b und Fig. 3c zeigen Schnitte durch Vergussvolumina 16 und die Verwendung der angespritzten Weichformteile 4 vor dem Verguss. Es ist klar, dass es sich nur um beliebige Beispiele handelt, die variantenreich ausgestaltet werden können.

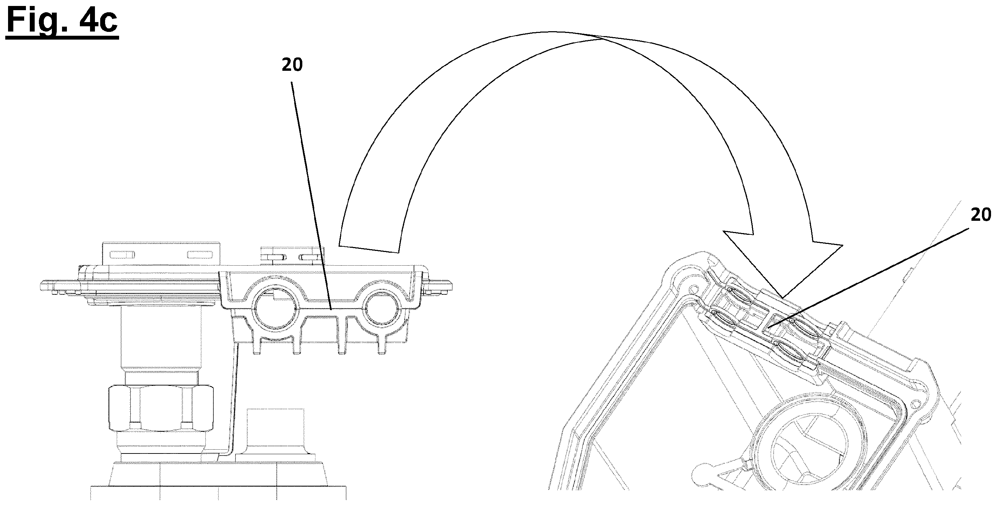

Hierbei zeigt Fig. 3a einen Schnitt durch ein vergossenes Kapselgehäuse 6 in Höhe eines Anschlusses 11 für den Warmwasserkreislauf mit einem Deckel 2, der Dichtung durch die Weichformteile 4 zusammen mit den angespritzten Weichformteilen 4, der Unterschale 1 und den mit Verguss zu füllenden Aussparungen, zuvor 3, die das Vergussvolumen 16 bilden. Das angespritzte Weichformteil 4 ragt in die zu vergießende Aussparung 3 hinein wie eine Nase und verhindert, dass die gelartige Vergussmasse während des Vergießens und vor dem Verfestigen in den Hohlraum darunter abfließen kann. Auf der linken Seite ist ein Ausschnitt des Einlegeteils 20 (siehe Fig. 4c) erkennbar mit dem unteren Einlegeteil 17 und dem oberen Einlegeteil 19 als Gegenstück, welche zusammen die Kupferrohre der Kältemittelanschlüsse 7 und 8 halten sollen, die hier selbst nicht gezeigt sind.

Fig. 3b zeigt als Detail aus Fig. 3a in Vergrößerung einen Teil des Deckels 2, der Weichformteile 4 und der Unterschale 1 vor dem Verguss von der Seite, wobei die Ziffern identisch gelten. Fig. 3c zeigt eine andere Detailansicht mit dem Deckel 2, dem Vergussvolumen 16 und dem Kältemittelanschluss 7 vor dem Verguss.

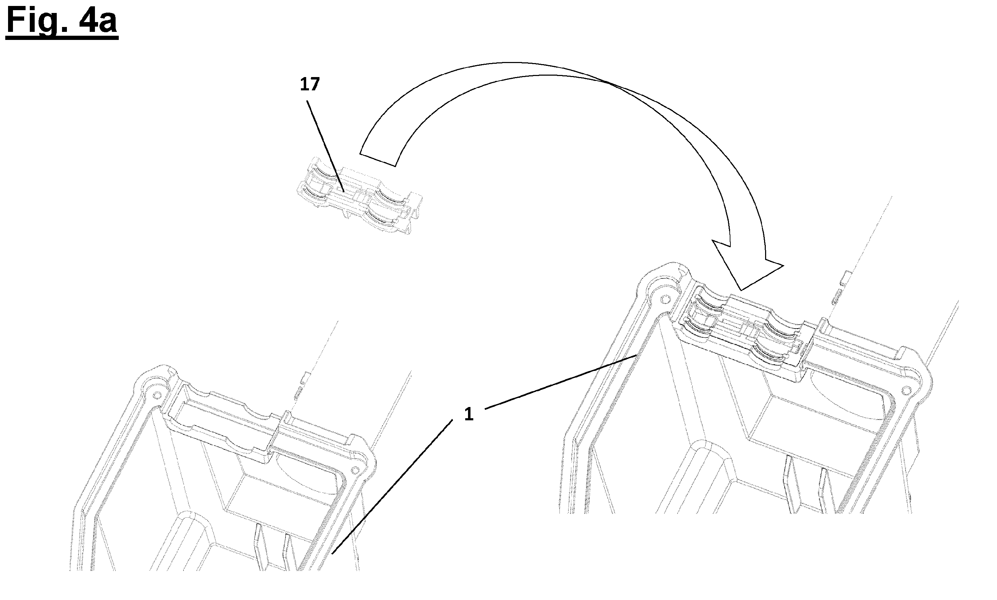

Fig. 4a zeigt ein zweiteiliges Einlegeteil, dessen unteres Einlegeteil 17 hier separat gezeigt wird, das in die Aussparung der Unterschale 1 eingesetzt wird, was durch einen Pfeil angedeutet wird. Im rechten Teil von Fig. 4a wird das untere Einlegeteil 17 des Einlegeteils im eingesetzten Zustand dargestellt. Es ist zu diesem Zeitpunkt noch nicht fixiert.

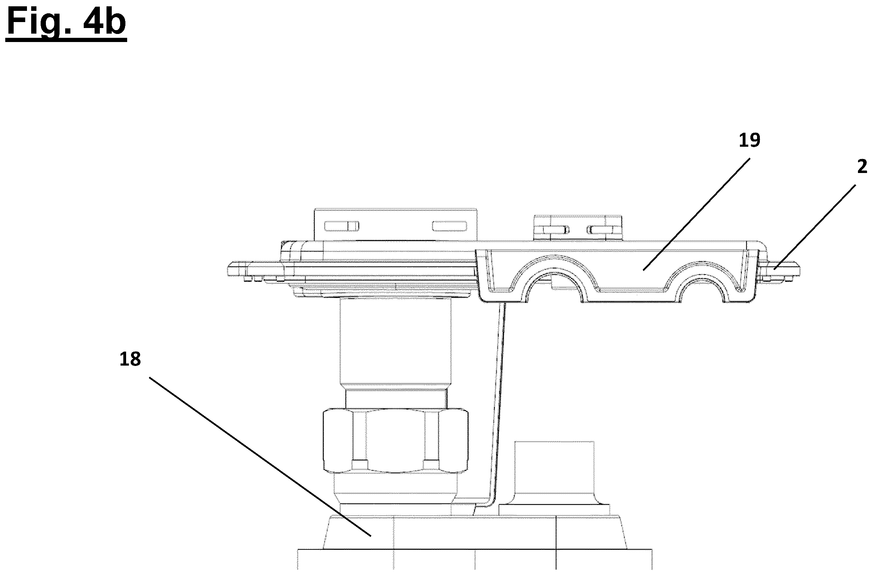

Fig. 4b zeigt das obere Einlegeteil 19 als Gegenstück des zweiteiligen Einlegeteils. welches am Deckel 2 angebracht ist, von der Seite, d.h. so, dass das Vergusswerkzeug von oben eingreifen wird. Im unteren Teil von Fig. 4b ist die Lage des Kondensators 18 angedeutet sowie der im Hintergrund befindliche Wasseranschluss für den Wasserkreislauf.

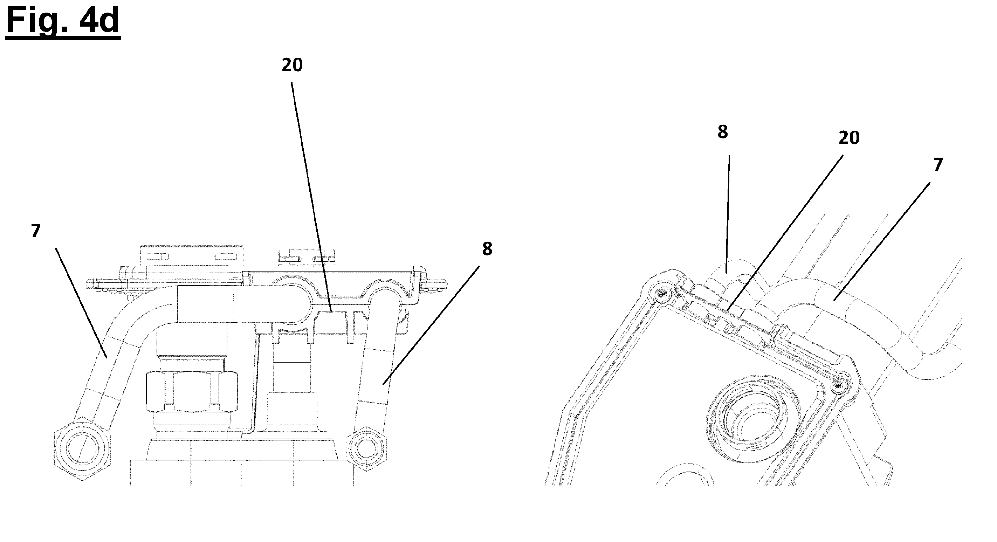

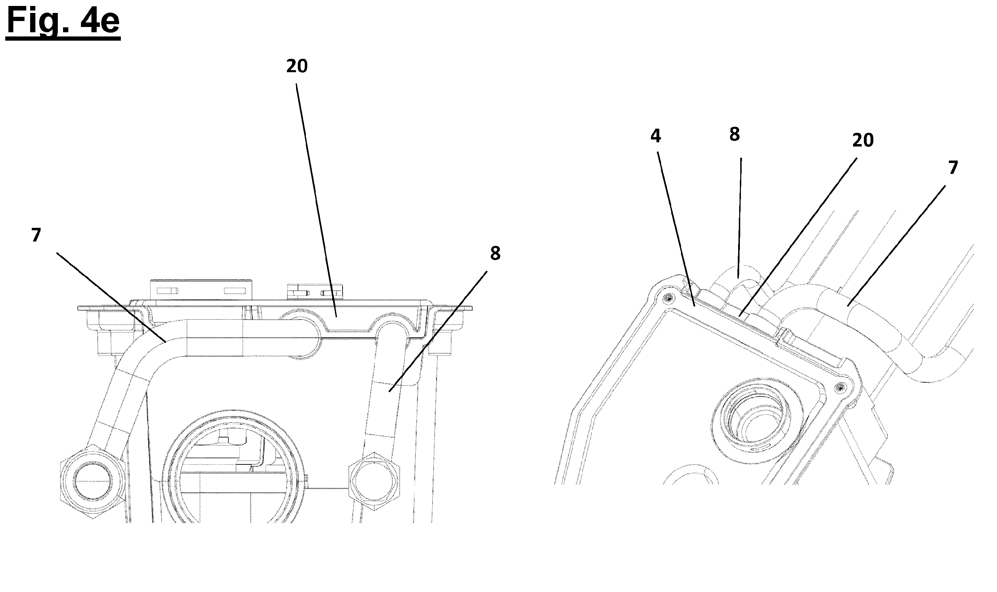

Fig. 4c zeigt das zusammengesetzte Einlegeteil 20, das noch nicht fixiert ist. Fig. 4d zeigt dasselbe mit den in das Einlegeteil 20 eingepassten Anschlüssen 7 und 8 für das Kältemittel, dies sind in diesem Beispiel die Rohranschlüsse für das Kältemittel, sie sind kopfseitig vorgesehen. Fig. 4e zeigt das in Fig. 4d gezeigte mit dem Weichformteil 4 darüber.

In den nachfolgenden Figuren wird gezeigt, wie zunächst die Dichtungen der Rohranschlüsse für das Kältemittel vorgenommen werden, bevor der Deckel montiert und zusammen mit den Rohranschlüssen für den Wasserkreislauf vergossen wird.

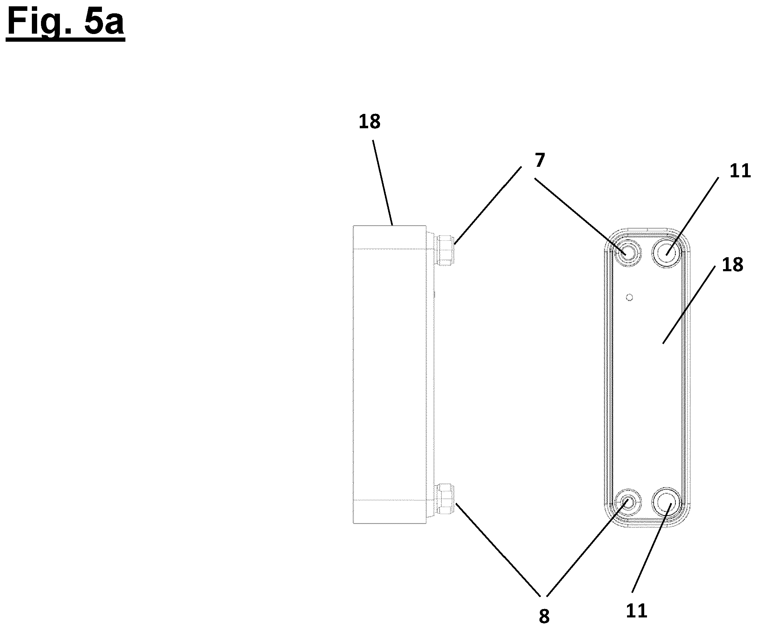

Fig. 5a bis Fig. 5i zeigen hierbei die einzelnen Montageschritte für die Einkapselung des Kondensators 18 mit den Rohranschlüssen 7 und 8 des Kältemittels einschließlich des Vergusses. Diese Montageschritte sind im Allgemeinen die folgenden:
- Verbinden der Rohranschlüsse der Kältemittelleitungen mit dem Kondensator durch Anlöten.
- Anschrauben der Wasseranschlüsse.
- Einlegen des Kondensators mitsamt den Anschlüssen in das Gehäuse-Einlegeteil.
- Aufsetzen des Gehäusedeckels.
- Verschrauben des Gehäusedeckels mit dem Gehäuse-Einlegeteil.
- Auflegen des Weichformteils.
- Verguss.

Fig. 5a zeigt dabei auf der linken Seite den Kondensator 18 mit den beiden Kältemittelanschlüssen 7 und 8. Auf der rechten Seite wird eine um 90 Grad gekippte Darstellung gezeigt, in der darüber hinaus die Anschlüsse für Warmwasserkreislauf 11 zu sehen sind.

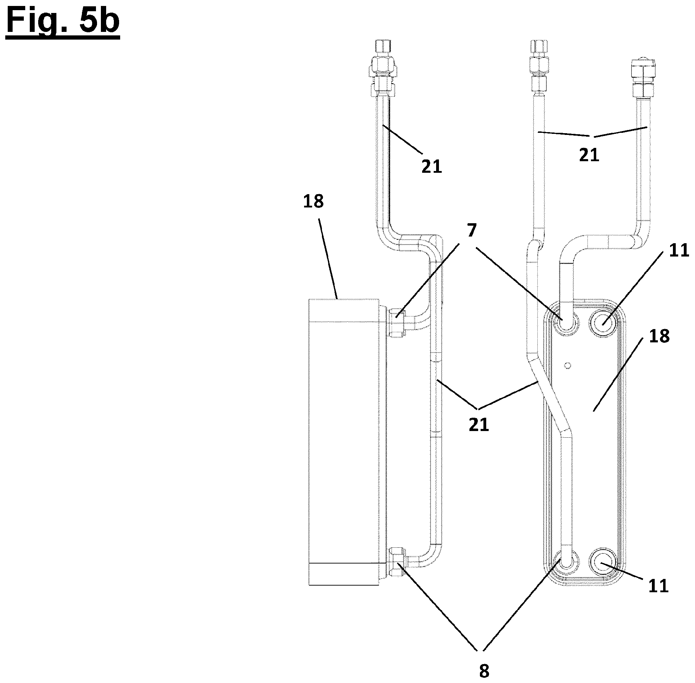

Fig. 5b zeigt als ersten Montageschritt, dass die Kupferrohre, durch die das Kältemittel später fließt, an den Kondensator 18 angelötet werden. Hierbei kann auch eine Dichtigkeitsprüfung erfolgen. Im vorliegenden Beispiel werden wie in Fig. 5a auf der linken Seite die Seitenansicht des Kondensators 18 und auf der rechten Seite eine Draufsicht gezeigt.

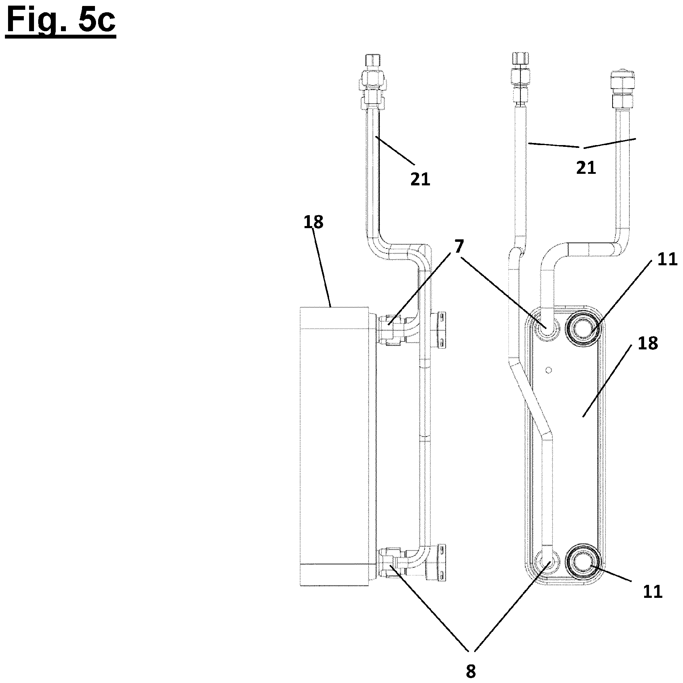

In Fig. 5c wird als zweiter Montageschritt das Anschrauben der Wasseranschlüsse 11 gezeigt. Wie in Fig. 5a werden auf der linken Seite die Seitenansicht und auf der rechten Seite die Draufsicht gezeigt.

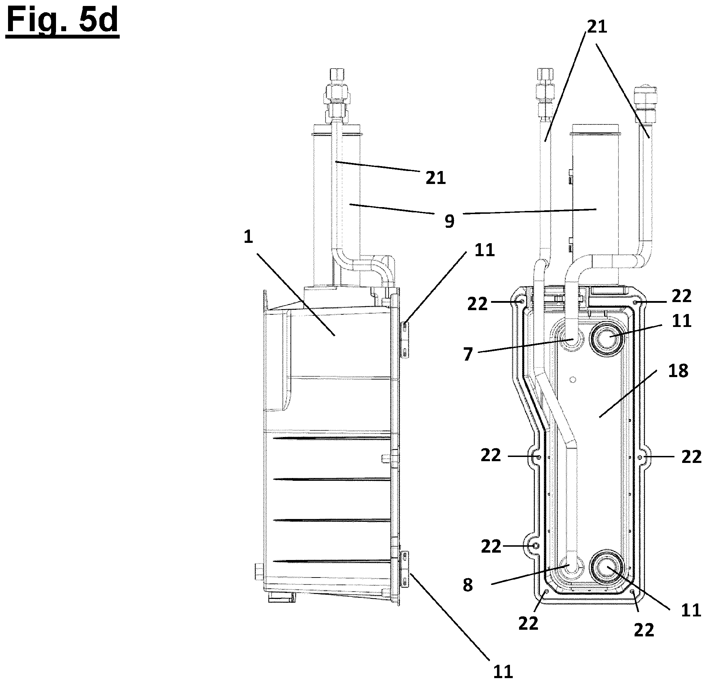

In Fig. 5d erfolgt als dritter Montageschritt das Einlegen des Kondensators 18 in die Unterschale 1 des Kapselgehäuses, wobei in die Unterschale 1 der Einsatz für die Kupferrohre eingesetzt wird. Die Unterschale 1 weist auch die Aufnahmen 21 für die Verschraubung des Deckels auf. Wie in Fig. 5a werden auf der linken Seite die Seitenansicht und auf der rechten Seite die Draufsicht gezeigt.

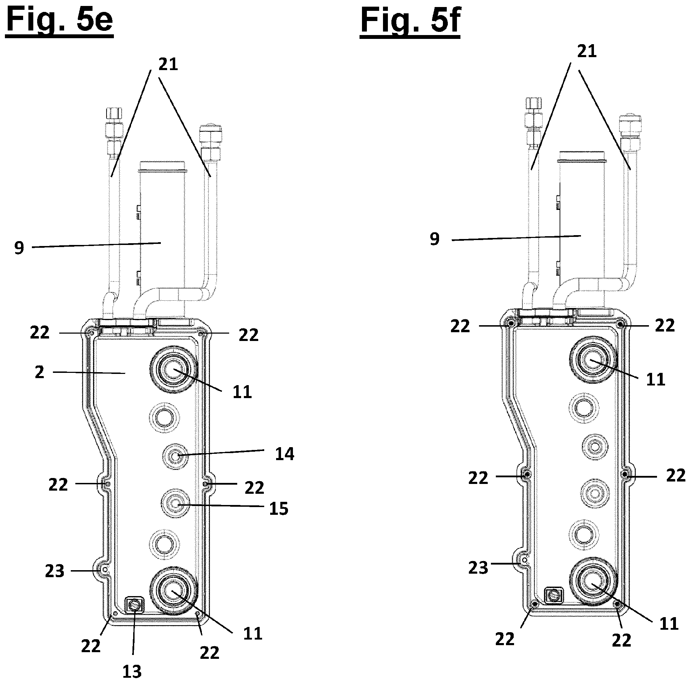

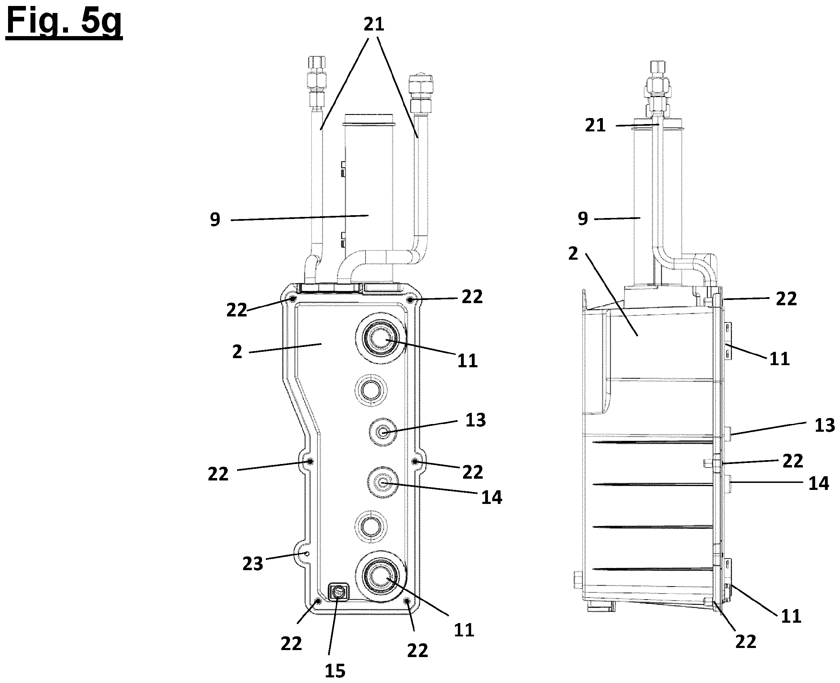

In Fig. 5e erfolgt als vierter Montageschritt das Aufsetzen und Verschrauben des Deckels 2 auf die Unterschale 1. In Fig. 5f wird das Weichformteil 4 aufgelegt. In Fig. 5g kann der Verguss erfolgen, in welchem der Deckel 2, die Durchbrüche für die Wasseranschlüsse 11 und die für die übrigen Anschlüsse dichtend mit der Unterschale 1 verbunden werden. Hierbei kann das Spritzwerkzeug kollisionsfrei über den Deckel 2 geführt werden und es müssen keine Translationen und/oder Drehungen des zu vergießenden Teils erfolgen. Nachdem die Vergussmasse auf die Dichtungsfugen aufgebracht ist, kann die Aushärtung erfolgen, während das Spritzwerkzeug zum nächsten Kapselgehäuse weiterschwenkt.

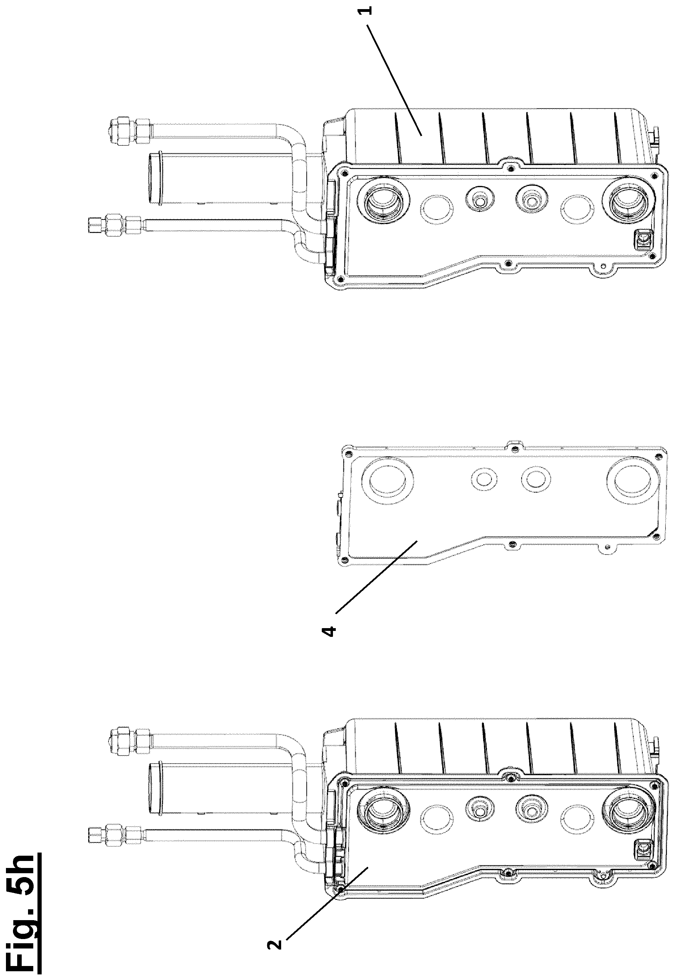

Fig. 5h zeigt den Vergussvorgang in perspektivischer Darstellung, wobei der linke Teil dem in Fig. 5e entspricht, die mittlere Ansicht das Weichformteil 4 zeigt, wie es schließlich aufgebracht ist und die rechte Seite den Zusammenbau nach dem Verguss zeigt.

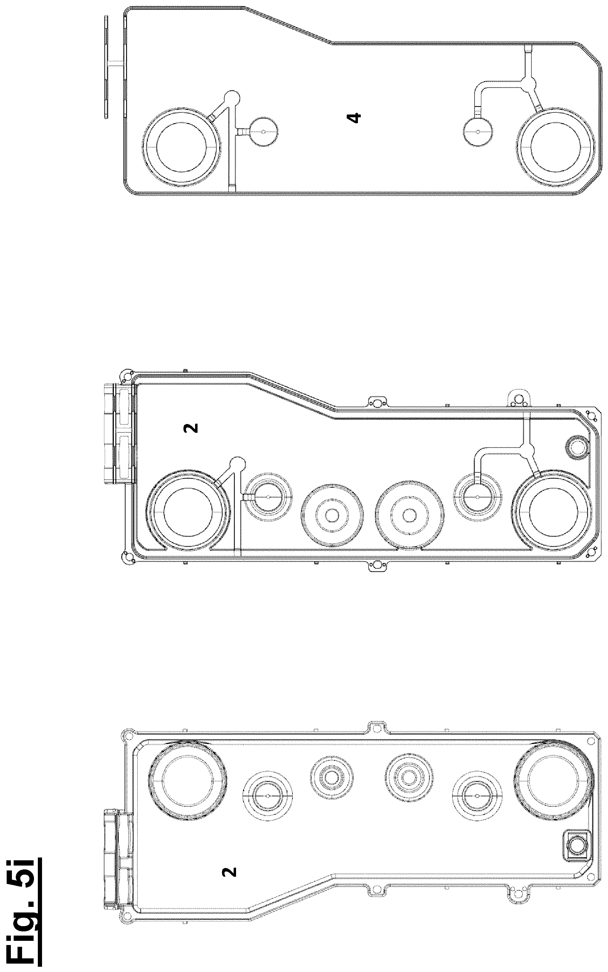

Fig. 5i zeigt den Deckel 2. Auf der linken Seite wird der Deckel 2 von oben gezeigt, in der mittleren Ansicht von unten und auf der rechten Seite sind die Anspritzungen der Weichformteile 4 auf der Deckelunterseite dargestellt, welche verhindern, dass die flüssige Vergussmasse beim Vergießen in das Innere des Kapselgehäuses bzw. in die Unterschale 1 laufen kann.

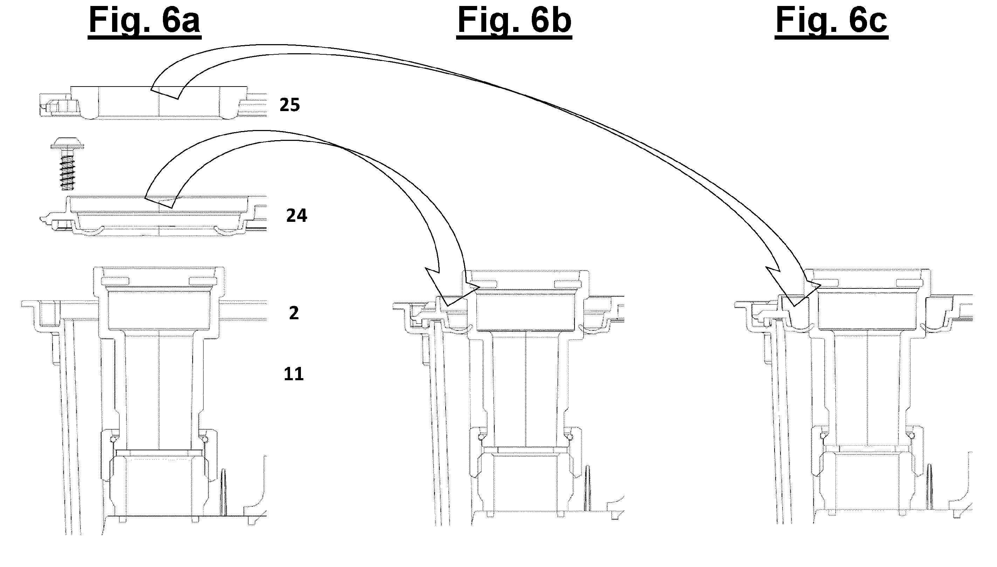

Die Fig. 6a bis 6c zeigen den Verguss von Rohranschlüssen 11 und ggf. weiteren Anschlüssen. Fig. 6a zeigt dabei einen Ausschnitt eines Anschlussdeckels 24 mit einem Kragen und der Vergussmasse 25 über dem Kapselgehäuse und einen Wasseranschluss 11. In Fig. 6b wird der Anschlussdeckel 24 auf den Wasseranschluss 11 gestülpt, dann angeschraubt, und in Fig. 6c werden die Hohlräume des Vergussvolumens 16 mit der Vergussmasse 25 vergossen, was analog zu dem geschieht, was in den Fig. 3a bis 3c dargestellt ist.

### Bezugszeichenliste

- 1: Unterschale
- 2: Deckel
- 3: Aussparung
- 4: Weichformteil
- 5: Aufhängungen
- 6: Kapselgehäuse
- 7: Kältemittelanschluss
- 8: Kältemittelanschluss
- 9: Abluftleitung
- 10: Adapter-Kapselgehäuse
- 11: Anschlüsse für Warmwasserkreislauf
- 12: Serviceöffnungen
- 13: Kältemittel-Luftabscheider
- 14: Überdruckventil
- 15: Drainage
- 16: Vergussvolumen
- 17: unteres Einlegeteil
- 18: Kondensator
- 19: oberes Einlegeteil
- 20: Einlegeteil
- 21: Kältemittelleitung
- 22: Verschraubung
- 23: Dorn
- 24: Anschlussdeckel
- 25: Vergussmasse

## Patentansprüche

1. Verfahren zur Dichtung eines Kapselgehäuses (6) in einem Kältekreis durch Verguss, wobei
- im Kapselgehäuse (6) kältemittelführende Teile eingeschlossen sind und Rohrleitungsanschlüsse (7, 8, 9, 11, 13, 14, 15) für Gase und/oder Flüssigkeiten aus dem Kapselgehäuse (6) heraus oder in das Kapselgehäuse (6) hineinführen,
- das Kapselgehäuse (6) aus zwei oder mehr Schalen (1, 2) zusammengesetzt ist, und Öffnungen für die Rohre und Rohrleitungsanschlüsse aufweisen,
- diese Schalen (1, 2) miteinander fixiert werden, nachdem alle im Kapselgehäuse (6) einzukapselnden Einrichtungen darin montiert und die sie verbindenden Rohrleitungen angeschlossen sind,
- um die Schalen (1, 2) und um die Öffnungen herum Nuten oder entsprechende Aussparungen (3) eingelassen sind,
- in diese Nuten oder entsprechende Aussparungen (3) Weichformteile (4) eingelegt werden, die so gestaltet sind, dass Flüssigkeit durch sie davon abgehalten wird, in das Innere des Kapselgehäuses (6) zu fließen,
**dadurch gekennzeichnet, dass**
- in diese Nuten oder entsprechenden Aussparungen (3) von oben eine flüssige Vergussmasse eingefüllt wird, die mit geeigneten Mitteln verfestigt wird und eine dichtende Masse ergibt.

2. Verfahren nach Anspruch 1, **dadurch gekennzeichnet, dass** das Kapselgehäuse (6) durch eine Translationsvorrichtung während des Vergießens so gedreht wird, dass die Vergussmasse immer der Schwerkraft entsprechend von oben zugeführt wird.

3. Verfahren nach einem der Ansprüche 1 oder 2, **dadurch gekennzeichnet, dass** die Vergussmasse eine Tränkharzformulierung ist.

4. Verfahren nach einem der Ansprüche 1 oder 2, **dadurch gekennzeichnet, dass** die Vergussmasse ein UV-härtbares Zwei-Komponenten-Urethanharz ist.

5. Dichtungssystem für eine Kapselvorrichtung, die geeignet für eine dichte Einkapselung von Kältemittel führenden Teilen sowie hierzu dienenden Anschlüssen und Rohrleitungen eines Kältekreises ist, aufweisend mindestens ein Kapselgehäuse (6), wobei
- das Kapselgehäuse (6) aus zwei oder mehr Schalen (1, 2) zusammengesetzt ist, und die Schale (1, 2) Öffnungen (7, 8, 9, 11,13,14,15) für die Rohre und Rohrleitungsanschlüsse aufweisen,
- Fixierungseinrichtungen (22,23), mit denen diese Schalen (1, 2) miteinander fixiert werden,
- um die Schalen (1, 2) und um die Öffnungen herum Nuten oder entsprechende Aussparungen (3) eingelassen sind,
- in diese Nuten oder entsprechende Aussparungen (3) Weichformteile (4) eingelegt sind, die so gestaltet sind, dass Flüssigkeit durch sie davon abgehalten wird, in das Innere des Kapselgehäuses (6) zu fließen,
**dadurch gekennzeichnet, dass**
in den umlaufenden Nuten oder entsprechenden Aussparungen (3) über den Weichformteilen (4) eine gehärtete Vergussmasse (16) eingefügt ist, welche alle Verbindungsteile der Kapselvorrichtung dicht umschließt.
